# EUROPÄISCHE PATENTANMELDUNG

(11) **EP 2 136 172 A1**
(43) Veröffentlichungstag der Anmeldung: **23.12.2009**
(21) Anmeldenummer: 08010980.4
(22) Anmeldetag: 17.06.2008
(51) Int. Cl.: F27B 3/08

(54) **Lichtbogenofen**

(71) Anmelder: SIEMENS AKTIENGESELLSCHAFT, 80333 München (DE)
(72) Erfinder: Mossmann, Björn, 77654 Offenburg (DE); Rosner, Johannes, 10100 Prag (CZ); Schmid, Michael, 77654 Offenburg (DE); Wilhelm, Uwe, 77731 Willstätt/Legelshurst (DE)

(57) **Zusammenfassung**

Lichtbogenofen (2) mit einem Erkerpanel (26), einem Untergefäß (4), welches eine außermittig angeordnete Abstichöffnung aufweist, und einer Messvorrichtung (20) mit einer ausfahrbar an einem Messkopf (22) befestigten Messlanze (24). Die Messvorrichtung (24) ist in einer Arbeitsposition derart oberhalb des Erkerpanels (26) positionierbar, so dass die Messlanze (24) durch eine in dem Erkerpanel (26) vorhandene Öffnung (28) in den Schmelzraum (38) einführbar ist.

## Beschreibung

Die Erfindung betrifft einen Lichtbogenofen mit einem Erkerpanel und einem Untergefäß, welches eine außermittig angeordnete Abstichöffnung aufweist.

Die Wiederaufarbeitung von Stahlschrott zum Zweck der Rohstahlgewinnung gewinnt zunehmend an Bedeutung. Vornehmlich werden hierzu Lichtbogenöfen eingesetzt, die auch als Elektrolichtbogenöfen bezeichnet werden. Bei einem Lichtbogenofen wird das Einsatzgut, also der als Ausgangsmaterial dienende Stahlschrott, mit Hilfe eines zwischen einer Elektrode und diesem brennenden Lichtbogen erhitzt und schließlich aufgeschmolzen. Zur Beschleunigung des Einschmelzprozesses kann der Stahlschrott zusätzlich mit Brennern erhitzt werden.

An moderne Stähle werden hohe Qualitätsanforderungen gestellt. Bereits während des Aufschmelzens des Stahlschrotts sind deshalb dessen Inhaltsstoffe und Zusammensetzung im Hinblick auf die sich anschließende gezielte Weiterbehandlung von Interesse. Ein wichtiger Prozessparameter ist die Temperatur der Schmelze, insbesondere da nach dem Aufschmelzen des Schrottes eine Überhitzungsphase folgt, während derer die Temperatur der Schmelze laufend überwacht werden muss.

Üblicherweise erfolgt die Überwachung des Schmelzprozesses mit Hilfe einer Messvorrichtung, die einen Probenkopf mit ausfahrbar daran befestigten Lanzen aufweist. An der Spitze der Lanzen befinden sich beispielsweise eine Temperatursonde oder eine Probeentnahmesonde. Bei herkömmlichen Lichtbogenöfen erfolgen die Messungen bei geöffneter Arbeitstür bzw. Schlacketür durch die Schlackentüroffung. Alternativ kann die Messung durch eine spezielle Öffnung im Deckel des Lichtbogenofens erfolgen. Teilweise sind die Messvorrichtungen in der Nähe der Arbeitstür an dem Ofen angebracht, und weisen einen Roboterarm bzw. Manipulator auf, der den mit Lanzen ausgerüsteten Messkopf trägt. Außerdem existieren mobile Messsysteme, die vor die Schlackentüröffnung gefahren werden können, um bei geöffneter Tür eine Messlanze in die Schmelze einzutauchen.

Eine Temperaturmesssonde besteht typischerweise aus einer Papphülse, die auf das Lanzenrohr aufgesteckt wird, an deren Ende sich ein Keramikkopf mit einem in einem Quarzglasaufsatz angeordneten Thermoelement befindet. Die lediglich zur einmaligen Verwendung geeignete Temperaturmesssonde wird zum Zweck der Messung mit Hilfe der Lanze für wenige Sekunden in die flüssige Schmelze getaucht. Eine Probeentnahmesonde weist ebenfalls ein Papprohr auf, an dessen Ende eine Kokille zur Aufnahme von in die Sonde eindringendem und dort erstarrendem Material vorhanden ist. Auch eine Probeentnahmesonde ist lediglich zur einmaligen Verwendung geeignet.

Die bekannten Messsysteme, welche überwiegend durch die Schlackentüröffnung die Temperatur der Schmelze bestimmen bzw. eine Probe aus der Schmelze entnehmen, sind überwiegend handgeführt, so dass sich zum Zweck der Messung eine Person im Gefahrenbereich des Lichtbogenofens aufhalten muss. Es besteht außerdem das Problem, dass sich Schlacke oder Schrottreste im Bereich der Schlacketür befinden können, so dass eine Messung erschwert oder gar unmöglich ist.

Aufgabe der vorliegenden Erfindung ist es, einen Lichtbogenofen mit einer Messeinrichtung anzugeben, welcher hinsichtlich der im Stand der Technik vorhandenen Probleme verbessert ist und insbesondere eine einfache und sichere Messung bzw. Probeentnahme an der Schmelze ermöglicht.

Die Aufgabe wird gelöst durch einen Lichtbogenofen mit den Merkmalen nach Anspruch 1.

Der erfindungsgemäße Lichtbogenofen weist ein Erkerpanel, ein Untergefäß, welches eine außermittig angeordnete Abstichöffnung aufweist, und eine Messvorrichtung auf. Die Messvorrichtung wiederum umfasst zumindest eine ausfahrbar an einem Messkopf befestigte Messlanze, wobei der Messkopf in einer Arbeitsposition derart oberhalb des Erkerpanels positionierbar ist, dass die Messlanze durch eine in dem Erkerpanel vorhandene Öffnung in den Schmelzraum des Lichtbogenofens einführbar ist.

Da die Messlanze durch eine in dem Erkerpanel vorhandene Öffnung in den Schmelzraum eingeführt wird, kann eine an der Spitze der Messlanze angeordnete Sonde auf kurzem Wege in das in dem Schmelzraum vorhandene Schmelzbad eingetaucht werden. Es besteht außerdem die Möglichkeit, die Messlanze sowohl geradlinig als auch schräg in den Schmelzraum einzuführen.
Wird die Messlanze geradlinig in den Schmelzraum eingeführt, so kann die Messsonde besonders tief in das Ofeninnere eindringen, die Messung wird dadurch genauer. Wird die Messlanze schräg in den Schmelzraum eingeführt, so wird ein großer Abstand zwischen der Ofenausmauerung und der Sonde gewahrt. Die Wahrscheinlichkeit dafür, dass die Sonde mit der Ausmauerung oder an dieser etwaig vorhandenen Schlackenanbackungen kollidiert kann verringert werden. Üblicherweise weisen zur Schrottbehandlung verwendete Lichtbogenöfen im Bereich ihrer Erkerbühne, genauer gesagt, in dem den Schmelzraum gegenüber der Umgebung abschließenden Erkerpanel, welches außerdem als Kühlpanel ausgestaltet sein kann, verschiedene Öffnungen auf. Besonders vorteilhaft kann, ohne dass weitere Umbauten an dem vorhandenen Lichtbogenofen nötig werden, dieser mit einer entsprechenden Messvorrichtung nachgerüstet werden. Bei bekannten Messverfahren, bei denen eine Sonde durch die Schlackentüröffnung in die Schmelze eingeführt wird, tritt oftmals das Problem auf, dass die Schlackentüröffnung durch Schrottreste oder Schlackeanhäufungen blockiert ist. Eine Messung ist erschwert oder gar unmöglich. Der unterhalb des Erkerpanels liegende Bereich des Schmelzraums ist vor Schlackeverschmutzungen weitgehend geschützt, so dass eine Messung in diesem Bereich besonders zuverlässig durchführbar ist. Außerdem ist der Bereich des Erkers für Wartungsarbeiten über die Erkerbühne gut zugänglich, so dass bei einer gegebenenfalls an der Messvorrichtung auftretenden Störung das Servicepersonal problemlosen Zugang hat. Für den Fall einer gravierenden Störung, bei der die Zugangsöffnung im Bereich des Erkerpanels durch die Messvorrichtung blockiert ist, bleibt die Schlackentüröffnung nach wie vor zugänglich, so dass im Zweifelsfall eine Messung nach konventioneller Art durchgeführt werden kann.

Vorteilhafte Ausgestaltungen des erfindungsgemäßen Lichtbogenofens gehen aus den von Anspruch 1 abhängigen Unteransprüchen hervor.

Nach einer ersten Ausführungsform weist der Lichtbogenofen eine zur Positionierung des Messkopfes vorgesehene Positioniervorrichtung auf, die auf einer Ofenbühne des Lichtbogenofens aufgestellt ist. Eine Ofenbühne ist eine das Untergefäß des Lichtbogenofens umgebende Plattform, die sich etwas unterhalb des Erkerpanels erstreckt. Dabei wird der unmittelbar an das Untergefäß angrenzende Bereich der Plattform, der bei Entleeren des Ofens mit diesem gemeinsam gekippt wird, nicht mehr als Ofenbühne sondern als Wiege bezeichnet. Auf der Ofenbühne kann die Positioniervorrichtung problemlos aufgestellt werden da diese beispielsweise für die Hallenkrane gut zu erreichen ist. Im Bereich der Ofenbühne behindert die Messvorrichtung weder das Chargieren von Schrott in den Lichtbogenofen noch die Zugabe von Legierungsmaterialien in die Pfanne. Außerdem ist sie an dieser Stelle für das Servicepersonal gut zu erreichen.

Um auch eine Behinderung der Schwenkbewegung des Ofendeckels auszuschließen, ist die Positioniervorrichtung nach einer Ausführungsform auf derjenigen Seite der Ofenbühne aufgestellt, die der Schwenkvorrichtung für den Deckel des Lichtbogenofens gegenüber liegt.

Die Sonden für Lichtbogenöfen in der Schrottverwertung sind typischerweise lediglich einmal verwendbar. Nach erfolgter Messung oder Probeentnahme erfordert der Austausch der Messsonde deswegen den Aufenthalt eines Technikers im Gefahrenbereich des Lichtbogenofens. Dies kann bei einem Lichtbogenofen nach einer Ausführungsform, bei dem die Sonden automatisch aus einem Magazin nachgeladen werden, verhindert werden. Der Messkopf der Messvorrichtung ist hierzu zwischen einer Ruhe und der Arbeitsposition positionierbar und umfasst ein Sondenmagazin, welches zur automatischen Aufnahme von Sonden durch die Messlanze - in der Ruheposition des Messkopfes - geeignet ist. Durch eine solche Ausgestaltung des Lichtbogenofens wird die Arbeitssicherheit erheblich verbessert.

Zur Herstellung hochwertiger Stähle ist die Kontrolle verschiedenste Prozessparameter während des Aufschmelzprozesses von Interesse. Aus diesem Grund weist der Lichtbogenofen nach einer weiteren Ausführungsform eine Messvorrichtung auf, deren Messlanze zur Aufnahme mehrerer Sonden geeignet ist. Mit Hilfe einer solchen Messvorrichtung ist es möglich, gleichzeitig oder in zeitlich kurzen Abständen, mehrere Messungen mit unterschiedlichen Sonden durchzuführen. Die Positionierung des Messkopfes muss dabei lediglich einmal durchgeführt werden. Innerhalb kurzer Zeit können so mit geringem Aufwand eine Vielzahl von Parametern gemessen werden.

Ein wesentliche Prozessgröße ist die Temperatur der Schmelze. Aus diesem Grund ist es besonders vorteilhaft, wenn nach einer weiteren Ausführungsform der Lichtbogenofen eine Messvorrichtung umfasst, die eine Messlanze aufweist, die zur Aufnahme einer Temperatursonde geeignet ist. Neben der Prozesstemperatur ist die Zusammensetzung der Schmelze ein weiterer wichtiger Parameter, der sich entscheidend auf die Qualität des Stahls auswirkt. Ein Lichtbogenofen nach einer weiteren Ausführungsform umfasst deshalb eine Messvorrichtung mit einer Messlanze, die zur Aufnahme einer Probeentnahmesonde geeignet ist.

Gemäß einer weiteren Ausführungsform handelt es sich bei der Positioniervorrichtung um einen Mehrgelenksarmmanipulator. Dieser erlaubt eine flexible Bewegung des Messkopfes; es ist insbesondere möglich Hindernissen im Bereich des Erkerpanels auszuweichen, und so eine zuverlässige Positionierung der Messlanze zu gewährleisten.

Die Arbeitsumgebung eines Lichtbogenofens in der Schrottaufbereitung stellt hohe Anforderungen an dort eingesetzte Gerätschaften. Neben hohen Zuverlässigkeitsanforderungen aufgrund erschwerter Wartungsarbeiten im Gefahrenbereich des Lichtbogenofens sind hohe Temperaturen und Schmutz nur einige weitere erschwerende Bedingungen. Aus diesem Grund ist es besonders vorteilhaft, dass nach einer weiteren Ausführungsform der Gelenkarmmanipulator ein Viergelenkarmmanipulator ist. Bei einem solchen Manipulator wird lediglich ein Antriebsglied zur Bewegung aller Glieder benötigt. Ein Gelenkarmmanipulator weist außerdem ausschließlich Drehverbindungen zwischen den einzelnen Gliedern des Gelenkarmes auf, welche gegenüber Schmutz wenig anfällig sind. Ebenfalls vorteilhaft ist, dass der an dem Manipulator gehaltene Messkopf stets in der gleichen Orientierung gehalten wird und keine Nickbewegung vollführt. Dies erlaubt eine einfache und präzise Positionierung des Messkopfes.

Weitere vorteilhafte Ausgestaltungen des erfindungsgemäßen Lichtofenbogens gehen aus den vorstehend nicht angesprochenen Unteransprüchen hervor. Zur weiteren Erläuterung der Erfindung wird auf die Ausführungsbeispiele der Zeichnungen verwiesen. Es zeigen:
- FIG 1: ein Lichtbogenofen mit einer Messvorrichtung in Perspektivansicht,
- FIG 2a: eine solche Messvorrichtung in ihrer Ruheposition und
- FIG 2b: die Messvorrichtung in ihrer Arbeitsposition, jeweils in einer Seitenansicht.

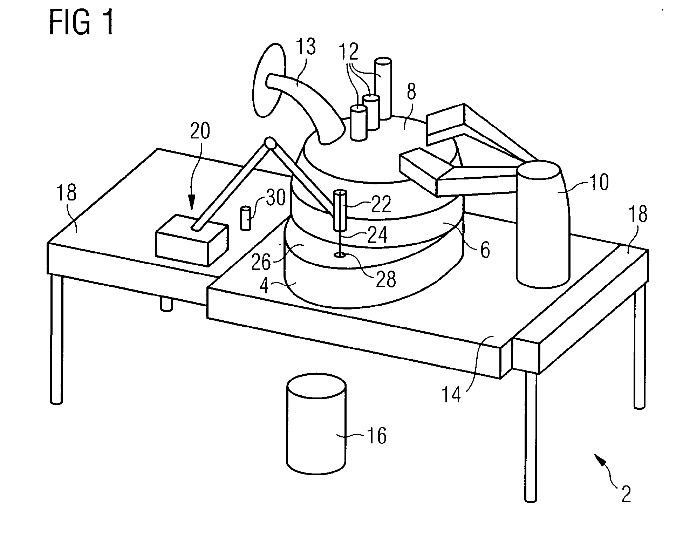

Ein Lichtbogenofen 2 (auch als Elektrolichtbogenofen oder engl. electic arc furnance bezeichnet) zur Wiederaufarbeitung von Stahlschrott ist in FIG 1 gezeigt. Dieser besteht aus einem Untergefäß 4 und einem sich daran anschließenden Obergefäß 6. Der von dem Unter- und Obergefäß 4,6 umgebene Schmelzraum des Lichtofenbogens 2 ist zu dessen Oberseite hin durch einen Deckel 8 abgeschlossen. Dieser kann zur Befüllung des Lichtbogenofens 2 mit Ausgangsmaterial/Stahlschrott mit Hilfe einer Schwenkvorrichtung 10 (auch als Portal bezeichnet) zur Seite geschwenkt werden. Durch den Deckel 8 des Lichtofenbogens 2 sind Elektroden 12 geführt, zwischen deren unterem Ende und dem in dem Schmelzraum befindlichen Stahlschrott ein Lichtbogen brennt, der das Ausgangsmaterial aufschmilzt. Der Lichtbogenofen 2 wird durch einen Abgas-Krümmer 13 entlüftet. Der Lichtbogenofen 2 ist an seinem Untergefäß 4 in einer Wiege 14 gehalten, welche gekippt werden kann, so dass zur Entleerung des Schmelzraumes der schmelzflüssige Stahl in eine Pfanne 16 gegossen werden kann. Zu beiden Seiten der Wiege 14 befindet sich die Ofenbühne 18, welche im Gegensatz zu dieser nicht kippbar ist. Die Schwenkvorrichtung 10 für den Deckel 8 ist auf der Wiege 14 aufgestellt.

Auf der der Schwenkvorrichtung 10 gegenüberliegenden Seite des Elektrolichtbogenofens 2 ist auf der Ofenbühne 18 eine Messvorrichtung 20 aufgestellt, deren an einem Messkopf 22 befestigte Messlanze 24 durch eine in einem Erkerpanel 26 vorhandene Öffnung 28 in den Schmelzraum des Lichtofenbogens 2 einführbar ist. Das Erkerpanel 26 erstreckt sich in einer Ebene zwischen dem Unter- und Obergefäß 4,6 des Lichtbogenofens 2, und schließt diesen gegenüber seinem Außenraum ab. Das Erkerpanel 26 kann außerdem als Kühlpanel ausgestaltet sein. Vorzugsweise liegt das Erkerpanel 26 einer in dem Untergefäß 2 vorhandenen, exzentrisch angeordneten Abstichöffnung in vertikaler Richtung gegenüber. Das Erkerpanel 26 liegt also im Wesentlichen oberhalb der in dem Untergefäß 2 vorhandenen Abstichöffnung. Das Erkerpanel 26 ist insbesondere zu Wartungsarbeiten über eine Erkerbühne zugänglich. Im Bereich des Erkerpanels 26 befinden sich üblicherweise weitere Einbauten in dem Lichtbogenofen 2. Beispielsweise weist das Erkerpanel 26 eine Öffnung auf, welche zur Verfüllung der Abstichöffnung nach dem Entleeren des Lichtbogenofens 2 genutzt wird. Zur zusätzlichen Erwärmung des Schmelzgutes kann sich im Bereich des Erkers des Lichtbogenofens 2, den das Erkerpanel 26 zu seiner Oberseite hin abschließt, ein Erkerbrenner befinden.

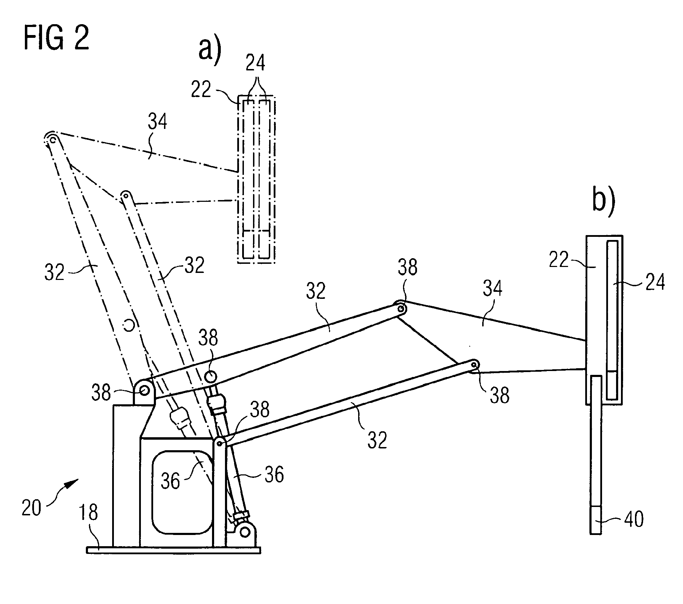

Die in FIG 1 lediglich schematisch angedeutete Messvorrichtung 20 ist in den FIG 2a,b detailliert dargestellt. Die Messvorrichtung 20 ist zwischen einer Ruhe- und einer Arbeitsposition schwenkbar; FIG 2a zeigt die Ruhe-, FIG 2b die Arbeitsposition der Messvorrichtung 20. Die Messvorrichtung 20 wird im Zusammenhang mit den FIG 2a,b näher erläutert. Zunächst wird der Lichtbogenofen 2 unter Bezugnahme auf FIG 1 weiter erläutert.

Die Messvorrichtung 20 kann mit Hilfe der Messlanze 24 in ihrer Ruheposition aus einem Sondenmagazin 30 verschiedene Messsonden oder Probeentnahmesonden aufnehmen. Der Wechsel der Messsonden kann automatisch erfolgen. Typische Sonden sind Temperaturmesssonden, Probeentnahmesonden oder Sonden zur Messung der Sauerstoffaktivität, die beispielsweise die Möglichkeit einer schnellen Kohlenstoffanalyse der Schmelze ermöglichen. In ihrer Arbeitsposition positioniert die Messvorrichtung 20 den Messkopf 22 derart oberhalb des Erkerpanels 26, so dass die Messlanze 24 durch die in dem Erkerpanel 26 vorhandene Öffnung 28 in die Schmelze eingetaucht werden kann. Der Messkopf 22 kann dabei derart gekippt werden, so dass die Messlanze 24 unter verschiedenen Winkeln in den Schmelzraum eingeführt werden kann. Es ist insbesondere möglich, bereits in dem Erkerpanel 26 vorhandene Öffnungen als Zugangsöffnung für die Messlanze 24 zu verwenden. Bei vielen Lichtbogenöfen befindet sich im Bereich des Erkers ein nicht in FIG 1 dargestellter Erkerbrenner. In dem Erkerpanel 26 befindet sich eine üblicherweise mit einer Kupferplatte verschlossene Öffnung, welche - nach Entleeren des Lichtbogenofens 2 - zum Verfüllen des Abstichloches verwendet wird. Eben jene Öffnung ist gut dazu geeignet die Messlanze 24 einer Messvorrichtung 20, wie sie zuvor beschrieben wurde, in den Schmelzraum einzuführen.

Gemäß dem in FIG 1 dargestellten Ausführungsbeispiel ist die Messvorrichtung 20 auf der der Schwenkvorrichtung 10 für den Deckel 8 des Lichtbogenofens 2 gegenüberliegenden Seite des Lichtbogenofens 2 auf der Ofenbühne 18 aufgestellt. An diesem Ort behindert die Messvorrichtung 20 die Schwenkbewegung des Deckels 8 beim Öffnen des Lichtbogenofens 2 am wenigsten. Prinzipiell kann die Messvorrichtung 20 auch an einem anderen geeigneten Ort aufgestellt werden. Entscheidend ist, dass es möglich ist, den Messkopf 22 über dem Erkerpanel 26 zu positionieren.

FIG 2a,b zeigen die bereits aus FIG 1 bekannte Messvorrichtung 20 jeweils in einer detaillierten Seitenansicht. Die Messvorrichtung 20, welche auf der Ofenbühne 18 aufgestellt ist, weist eine aus mehreren Gelenkstäben 32 und einem Kopfteil 34 bestehende Positioniervorrichtung auf, die über einen Hydraulikzylinder 36 bewegbar ist. Gelenkstäbe 32, Kopfteil 34 und der Hydraulikzylinder 36 sind durch Drehgelenke 38 miteinander verbunden. Der Messkopf 22, welcher gemäß dem dargestellten Ausführungsbeispiel zur Aufnahme zweier Messlanzen 24 geeignet ist, ist von dem Kopfteil 34 getragen. Bedingt durch die Konstruktion der Positioniervorrichtung als Viergelenkarmmanipulator kann der Messkopf 22 ohne Nickbewegung zwischen der Ruhe- und der Arbeitsposition bewegt werden. Der Messkopf 22 umfasst eine Hubvorrichtung für die Messlanzen 24, und ist bezüglich der Schwenkebene der Gelenkstäbe 32 um 90° gedreht an dem Kopfteil 34 befestigt.

Die Messlanzen 24 können durch die in dem Erkerpanel 26 vorhandene Öffnung 28 in die in dem Schmelzraum des Lichtbogenofens 2 vorhandene Schmelze eingetaucht werden. Die an der Spitze der Messlanze 24 befindliche Sonde 40 wird dabei ca. 400mm in die Schmelze eingetaucht.

## Patentansprüche

1. Lichtbogenofen (2) mit einem Erkerpanel (26), einem Untergefäß (4), welches eine außermittig angeordnete Abstichöffnung aufweist, und einer Messvorrichtung (20) mit einer ausfahrbar an einem Messkopf (22) befestigten Messlanze (24), der in einer Arbeitsposition derart oberhalb des Erkerpanels (26) positionierbar ist, dass die Messlanze (24) durch eine in dem Erkerpanel (26) vorhandene Öffnung (28) in den Schmelzraum des Lichtbogenofens (2) einführbar ist.

2. Lichtbogenofen (2) nach Anspruch 1, bei dem zur Positionierung des Messkopfes (22) eine Positioniervorrichtung (32,34,36) vorgesehen ist, die auf einer Ofenbühne (18) des Lichtbogenofens (2) aufgestellt ist.

3. Lichtbogenofen (2) nach Anspruch 2, bei dem die Positioniervorrichtung (32,34,36) auf der einer Schwenkvorrichtung (10) für einen Deckel (8) des Lichtbogenofens (2) gegenüberliegenden Seite der Ofenbühne (18) aufgestellt ist.

4. Lichtbogenofen (2) nach einem der vorstehenden Ansprüche, bei dem der Messkopf (22) der Messvorrichtung (20) zwischen einer Ruhe- und der Arbeitsposition positionierbar ist, wobei die Messvorrichtung (20) ein Sondenmagazin (30) umfasst, welches zur automatisierten Aufnahme von Sonden (38) durch die Messlanze (24) in der Ruheposition des Messkopfes (22) geeignet ist.

5. Lichtbogenofen (2) nach einem der vorstehenden Ansprüche, bei dem die Messlanze (24) zur Aufnahme mehrerer Sonden (38) geeignet ist.

6. Lichtbogenofen (2) nach einem der vorstehenden Ansprüche, bei dem die Messlanze (24) zur Aufnahme eine Temperatursonde geeignet ist.

7. Lichtbogenofen (2) nach einem der vorstehenden Ansprüche, bei dem die Messlanze (24) zur Aufnahme einer Probeentnahmesonde geeignet ist.

8. Lichtbogenofen (2) nach einem der vorstehenden Ansprüche, bei dem die Positioniervorrichtung (32,34,36) ein Mehrgelenksarmmanipulator ist.

9. Lichtbogenofen (2) nach Anspruch 8, bei dem der Gelenkarmmanipulator ein Viergelenkarmmanipulator ist.

## Geänderte Patentansprüche

### Geänderte Patentansprüche gemäss Regel 137(2) EPÜ.

**1.** Lichtbogenofen (2) mit einem Erkerpanel (26), einem Untergefäß (4), welches eine außermittig angeordnete Abstichöffnung aufweist, und einer Messvorrichtung (20) mit einer ausfahrbar an einem Messkopf (22) befestigten Messlanze (24), der in einer Arbeitsposition derart oberhalb des Erkerpanels (26) positionierbar ist, dass die Messlanze (24) durch eine in dem Erkerpanel (26) vorhandene Öffnung (28) in den Schmelzraum des Lichtbogenofens (2) einführbar ist,
**dadurch gekennzeichnet,**
**dass** zur Positionierung des Messkopfes (22) eine Positioniervorrichtung (32,34,36) vorgesehen ist, die auf einer Ofenbühne (18) des Lichtbogenofens (2) aufgestellt ist.

**2.** Lichtbogenofen (2) nach Anspruch 1, bei dem die Positioniervorrichtung (32,34,36) auf der einer Schwenkvorrichtung (10) für einen Deckel (8) des Lichtbogenofens (2) gegenüberliegenden Seite der Ofenbühne (18) aufgestellt ist.

**3.** Lichtbogenofen (2) nach einem der vorstehenden Ansprüche, bei dem der Messkopf (22) der Messvorrichtung (20) zwischen einer Ruhe- und der Arbeitsposition positionierbar ist, wobei die Messvorrichtung (20) ein Sondenmagazin (30) umfasst, welches zur automatisierten Aufnahme von Sonden (38) durch die Messlanze (24) in der Ruheposition des Messkopfes (22) geeignet ist.

**4.** Lichtbogenofen (2) nach einem der vorstehenden Ansprüche, bei dem die Messlanze (24) zur Aufnahme mehrerer Sonden (38) geeignet ist.

**5.** Lichtbogenofen (2) nach einem der vorstehenden Ansprüche, bei dem die Messlanze (24) zur Aufnahme eine Temperatursonde geeignet ist.

**6.** Lichtbogenofen (2) nach einem der vorstehenden Ansprüche, bei dem die Messlanze (24) zur Aufnahme einer Probeentnahmesonde geeignet ist.

**7.** Lichtbogenofen (2) nach einem der vorstehenden Ansprüche, bei dem die Positioniervorrichtung (32,34,36) ein Mehrgelenksarmmanipulator ist.

**8.** Lichtbogenofen (2) nach Anspruch 7, bei dem der Gelenkarmmanipulator ein Viergelenkarmmanipulator ist.
